(19) Europäisches Patentamt
European Patent Office
Office européen des brevets

(11) EP 3 814 703 B1

(12) EUROPEAN PATENT SPECIFICATION

(45) Date of publication and mention
of the grant of the patent:
**31.12.2025 Bulletin 2026/01**

(21) Application number: **19825701.6**

(22) Date of filing: **26.06.2019**

(51) International Patent Classification (IPC):
**F25D 23/06** (2006.01)   **F25D 23/00** (2006.01)
**F25D 19/00** (2006.01)   **F16L 59/065** (2006.01)
**F25B 40/00** (2006.01)   **F16L 3/12** (2006.01)
**F16L 3/22** (2006.01)

(52) Cooperative Patent Classification (CPC):
**F25D 23/068; F16L 3/13; F16L 3/23; F16L 3/24;
F16L 59/135;** F25D 2201/14; Y02A 30/242;
Y02B 80/10

(86) International application number:
**PCT/KR2019/007756**

(87) International publication number:
**WO 2020/004949 (02.01.2020 Gazette 2020/01)**

(54) **VACUUM ADIABATIC BODY AND REFRIGERATOR**

ADIABATISCHER VAKUUMKÖRPER UND KÜHLSCHRANK

CORPS ADIABATIQUE SOUS VIDE ET RÉFRIGÉRATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2018 KR 20180074231**

(43) Date of publication of application:
**05.05.2021 Bulletin 2021/18**

(60) Divisional application:
**25208285.4 / 4 653 736**

(73) Proprietor: **LG Electronics Inc.
07336 SEOUL (KR)**

(72) Inventors:
• **KIM, Daewoong**
**Seoul 08592 (KR)**
• **NAM, Hyeunsik**
**Seoul 08592 (KR)**
• **LEE, Jangseok**
**Seoul 08592 (KR)**

(74) Representative: **Ter Meer Steinmeister & Partner
Patentanwälte mbB
Nymphenburger Straße 4
80335 München (DE)**

(56) References cited:
EP-A2- 2 589 905      WO-A1-2017/023095
WO-A1-2018/022008    WO-A1-2018/111235
CN-U- 203 532 975     JP-A- 2009 281 477
KR-A- 20060 062 056   KR-A- 20180 057 596
US-A- 2 000 882       US-A- 2 617 551
US-A1- 2016 290 690   US-A1- 2017 176 092

**Description**

[Technical Field]

The present disclosure relates to a vacuum adiabatic body and a refrigerator.

[Background Art]

A vacuum adiabatic body may suppress heat transfer by vacuumizing the interior of a body thereof. The vacuum adiabatic body may reduce heat transfer by convection and conduction, and hence is applied to heating apparatuses and refrigerating apparatuses. In a typical adiabatic method applied to a refrigerator, although it is differently applied in refrigeration and freezing, a foam urethane adiabatic wall having a thickness of about 30 cm or more may be provided. However, the internal volume of the refrigerator may therefore be reduced.

In order to increase the internal volume of a refrigerator, there is an attempt to apply a vacuum adiabatic body to the refrigerator.

First, Korean Patent No. 10-0343719 (Cited Document 1) of the present applicant has been disclosed. Reference Document 1 discloses a method in which a vacuum adiabatic panel is prepared and then built in walls of a refrigerator, and the exterior of the vacuum adiabatic panel is finished with a separate molding such as Styrofoam. According to the method, additional foaming is not required, and the adiabatic performance of the refrigerator is improved. However, fabrication cost is increased, and a fabrication method is complicated. As another example, a technique of providing walls using a vacuum adiabatic material and additionally providing adiabatic walls using a foam filling material has been disclosed in Korean Patent Publication No. 10-2015-0012712 (Cited Document 2). According to Reference Document 2, fabrication cost is increased, and a fabrication method is complicated.

To solve this problem, the present applicant had filed Korean Patent Application NO. 10-2013-0049495 (Cited Document 3). This technique provides a vacuum adiabatic body in an empty vacuum state without providing a separate adiabatic material therein. In addition, this technique provides a heat exchange pipeline provided in the vacuum adiabatic body. The heat exchange pipeline is a pipeline in which two pipelines, i.e., an inlet pipe of an evaporator and an outlet pipe of the evaporator, contact each other. The heat exchange pipeline is a pipeline in which a refrigerant flowing through the inside of the two pipelines are heat-exchanged with each other to improve performance of a refrigerating cycle.

To allow the heat exchange pipelines to be heat-exchanged only therebetween and reduce a heat loss, the heat exchange pipeline may not contact a plate defining an outer wall of the vacuum adiabatic body. For this, a ring may be inserted into the heat exchange pipeline. The ring may be provided between the heat exchange pipeline and an inner surface of the plate to space the heat exchange pipeline from the plate.

Since an outer circumferential surface of the ring has the same shape as that of an outer circumferential surface of the heat exchange pipeline, and the ring has a closed curve shape, it is very difficult to insert the ring into the heat exchange pipeline.

The ring is made of a solid material and fully contacts the plate to support the plate. Thus, heat of the heat exchange pipeline may be conducted to a case to cause an adiabatic loss.

The ring has to be inserted into a vacuum space before the vacuum adiabatic body is assembled. Thus, after the vacuum adiabatic body is assembled, it is difficult to additionally insert the guide ring when a contact portion between the heat exchange pipeline and the plate occurs. Since the heat exchange pipeline is made of a copper material having weak rigidity and also is bent inside a spacer, it is more problematic.

Since the ring is not fixed, the ring may move from a desired position when a worker handles the heat exchange pipeline. If the ring moves, the position of the ring has to be adjusted again after being assembled.

EP 2 589 905 A2 discloses a refrigerator including an inner case, an outer case spaced apart from the inner case, a vacuum space provided between the inner case and the outer case, with being maintained vacuum, to insulate the inner case from the outer case, and a liquid-gas interchanger arranged in the vacuum space to generate heat exchange between refrigerant after exhausted from an evaporator and refrigerant before drawn into an evaporator.

KR 2018 0057596 A relates to a refrigerator including a vacuum space part between inner and outer cases forming a main body, and a liquid-gas heat exchanger disposed to form a long passage in the vacuum space part, and performing heat exchange between low temperature gaseous refrigerant passing an evaporator and room temperature liquid refrigerant before flowing into the evaporator.

WO 2018/111235 A1 relates to a vacuum insulated refrigerator structure including a shell having a liner and a wrapper where the shell defines an internal vacuum cavity, and a refrigerator and/or freezer compartment. The vacuum insulated refrigerator structure additionally includes an elongated pass-through defining an elongated internal space having a central portion disposed in the internal vacuum cavity.

WO 2018/022008 A1 presents a vacuum insulated refrigerator structure with a vacuum core material filled in around an elongated umbilical. The vacuum insulated refrigerator structure is made of a shell having a liner and a wrapper wherein the shell forms an internal cavity. A gas permeable casing surrounds the entire length of the elongated umbilical passing through the internal cavity of the shell.

US 2017/176092 A1 presents a method of routing utility lines in a vacuum insulated refrigerator structure includes forming a shell and an elongated umbilical comprising an elongated impervious sleeve and a core structure defining at least two elongated internal passageways extending lengthwise along the umbilical.

US 2 617 551 A relates to refrigerators, and provides such units with insulation between their inner and outer walls by a vacuum therebetween.

US 2 000 882 A presents a refrigerator housing provided with the inner and outer shells to provide a vacuum chamber therebetween. The inner shell carries a plurality of spacers or struts. Spacers are secured to the inner shell by means of metal clips which are soldered, welded, or otherwise joined to the shell. Located along the inner face of the outer shell are suitable means to provide fluid passages which may connect with a pipe, for exhaustion of gas and vapor from portions of the vacuum chamber.

[Disclosure]

[Technical Problem]

Embodiments provide a vacuum adiabatic body in which a spacing member spacing a heat exchange pipeline from a plate by a predetermined distance is easily coupled to the heat exchange pipeline.

Embodiments also provide a vacuum adiabatic body in which, when the heat exchange pipeline is supported to be spaced apart from the plate, contact between the spacing member and the plate is minimized to minimize an adiabatic loss due to thermal conductivity.

Embodiments also provide a vacuum adiabatic body in which a spacing member is installed at a required position, and then, the installed position is permanently fixed.

[Technical Solution]

One or more objects of the present technique are achieved by the invention set out by the features of the independent claim(s).

The vacuum adiabatic body includes a supporting unit or support configured to maintain an inner vacuum space part or gap and a pipeline provided in the vacuum space part. The pipeline is spaced apart form the inner vacuum space part by the supporting unit, and movement of the pipeline in a horizontal direction is restricted by the supporting unit. The pipeline is a heat exchange pipeline through which a refrigerant flows, and the pipeline may be stably supported by an interaction between a spacing member and the support unit.

In another embodiment, a refrigerator may include at least one spacing member or spacer configured to space a heat exchange pipeline provided in or passing through an inner vacuum space part of a vacuum adiabatic body provided as a wall of the refrigerator from other members within the vacuum space. The spacing member may support the heat exchange pipeline, and be made of a metal material. The spacing member includes a supporting part or guide accommodating the heat exchange pipeline therein; and at least one wing extending from the supporting part and supported by the supporting unit so as to restrict the movement of the heat exchange pipeline. According to an embodiment, the heat exchange pipeline may be supported by using the spacing member made of a metal material without outgassing.

A heat resistance unit or sheet that resists heat transfer between the plate members defining an outer wall of the vacuum adiabatic body may include a conductive resistance sheet that resists conduction of heat transferred along a wall of the vacuum space part and may further include a side frame coupled to the conductive resistance sheet.

Also, the heat resistance unit may include at least one radiation resistance sheet that is provided in a plate shape within the vacuum space part or may include a porous material that resists radiation heat transfer between the second plate member and the first plate member within the vacuum space part.

[Advantageous Effects]

According to the embodiment, since the worker may directly install the spacing member at a set position without having a distal end of the heat exchange pipeline inserted, and the assembly workability or installation may be convenient.

According to the embodiment, the number of indirect contact points between the heat exchange pipeline and the plate may be minimized to reduce the adiabatic loss of the vacuum adiabatic body.

According to the embodiment, the spacing member may be permanently fixed to the set position according to the design factors of the vacuum adiabatic body to improve the reliability of the product because an additional process is not required.

According to the embodiment, when the spacing member is additionally required by the unexpected deformation of the heat exchange pipeline made of the material such as copper, the spacing member may be conveniently installed to improve the yield of the good products.

[Description of Drawings]

FIG. 1 is a perspective view of a refrigerator according to an embodiment.
FIG. 2 is a view schematically showing a vacuum adiabatic body used in a main body and a door of the refrigerator.
FIGs. 3A - 3B are views illustrating various embodiments of an internal configuration of a vacuum space part.
FIG. 4 is a diagram illustrating results obtained by examining resins.
FIG. 5 illustrates results obtained by performing an experiment on vacuum maintenance performances of resins.
FIGs. 6A - 6C illustrate results obtained by analyzing components of gases discharged from a PPS and a low outgassing PC.
FIG. 7 illustrates results obtained by measuring maximum deformation temperatures at which resins are damaged by atmospheric pressure in high-temperature exhaustion.
FIGs. 8A - 8C are views showing various embodiments of conductive resistance sheets and peripheral parts thereof.
FIG. 9 is a partial cutaway view of the vacuum adiabatic body.
FIG. 10 is a view illustrating a state in which a heat exchange pipeline is provided in the vacuum space part.
FIG. 11 is a perspective view of a spacing member according to an embodiment.
FIG. 12 is a perspective view illustrating a state in which the spacing member is installed according to the embodiment of FIG. 11.
FIG. 13 is a schematic cross-sectional view taken along line I-I' of FIG. 12.
FIG. 14 is a front view of the spacing member of FIG. 11.
FIG. 15 is a perspective view of a spacing member according to another embodiment.
FIG. 16 is a perspective view illustrating a state in which the spacing member is installed according to the embodiment of FIG. 15.
FIG. 17 is a front view illustrating another example of the spacing member of FIG. 15.
FIG. 18 is a development view of a spacing member according to another embodiment.
FIG. 19 is a side view illustrating the spacing member of FIG. 18.

[Mode for Invention]

Hereinafter, exemplary embodiments will be described with reference to the accompanying drawings.
The drawings shown below may be displayed differently from the actual product, or exaggerated or simple or detailed parts may be deleted, but this is intended to facilitate understanding of the technical idea of the present invention. It should not be construed as limited.
Also, the number of each of the components illustrated together with the drawings facilitates the understanding of the inventive concept by assigning the same or similar number to the same or similar component in function. Similarly, in the case of performing the same or similar function in function even if the embodiments are different, the same or similar number is assigned to facilitate the understanding of the invention.
In the following description, the vacuum pressure means any pressure state lower than the atmospheric pressure. In addition, the expression that a vacuum degree of A is higher than that of B means that a vacuum pressure of A is lower than that of B.

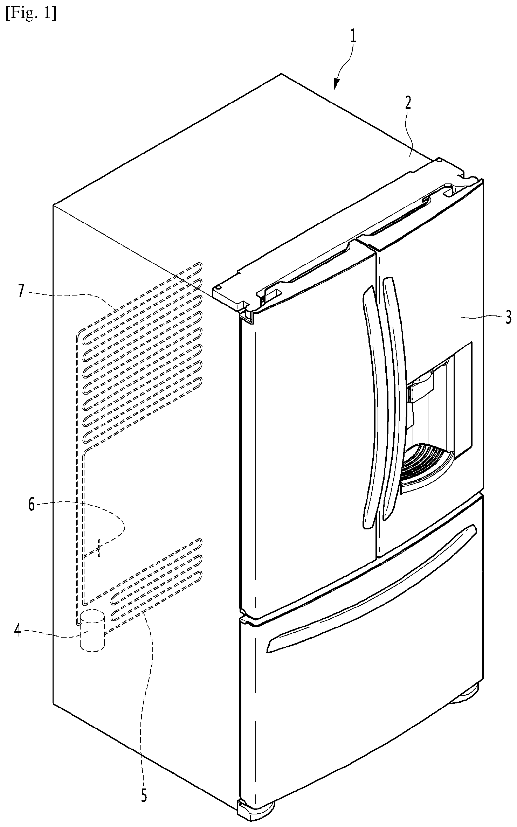

FIG. 1 is a perspective view of a refrigerator according to an embodiment.
Referring to FIG. 1, the refrigerator 1 may include a main body 2 provided with a cavity 9 capable of storing storage goods and a door 3 provided to open or close the main body 2. The door 3 may be rotatably or slidably movably provided to open or close the cavity 9. The cavity 9 may provide at least one of a refrigerating compartment and a freezing compartment.
The cavity 9 may be supplied with parts or devices of a refrigeration or a freezing cycle in which cold air is supplied into the cavity 9. For example, the parts may include a compressor 4 to compress a refrigerant, a condenser 5 to condense the compressed refrigerant, an expander 6 to expand the condensed refrigerant, and an evaporator 7 to evaporate the expanded refrigerant to take heat. As a typical structure, a fan may be installed at a position adjacent to the evaporator 7, and a fluid blown from the fan may pass through the evaporator 7 and then be blown into the cavity 9. A freezing load is controlled by adjusting the blowing amount and blowing direction by the fan, adjusting the amount of a circulated refrigerant, or adjusting the compression rate of the compressor, so that it is possible to control a refrigerating space or a freezing space.

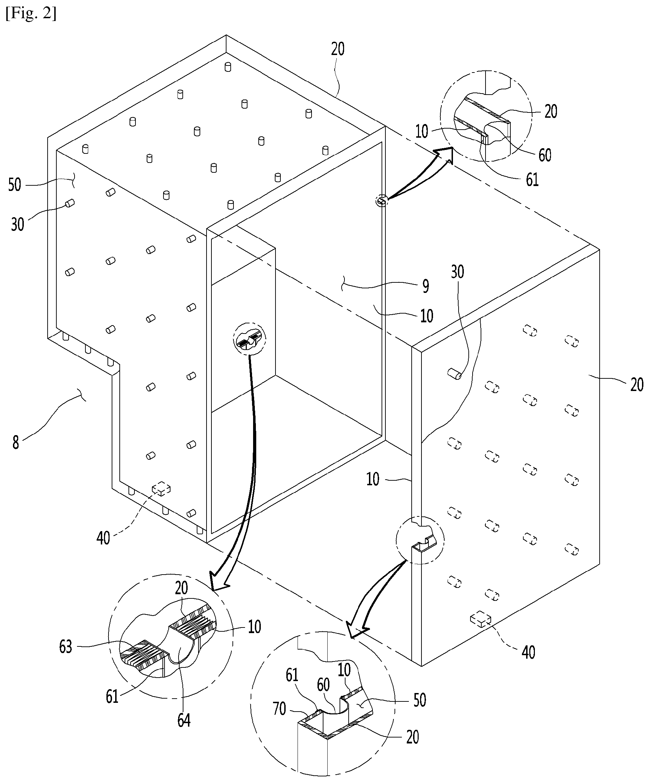

FIG. 2 is a view schematically showing a vacuum adiabatic body used in the main body 2 and the door 3 of the refrigerator 1. In FIG. 2, a main body-side vacuum adiabatic body is illustrated in a state in which top and side walls are removed, and a door-side vacuum adiabatic body is illustrated in a state in which a portion of a front wall is removed. In addition, sections of portions at conductive resistance sheets 60 or 63 are provided are schematically illustrated for convenience of understanding.

Referring to FIG. 2, the vacuum adiabatic body may include a first plate member 10 to provide a wall of a low-temperature space or a first space, a second plate member 20 to provide a wall of a high-temperature space or a second space, and a vacuum space part or a third space 50 defined as a gap between the first and second plate members 10 and 20. Also, the vacuum adiabatic body includes the conductive resistance sheets 60 and 63 to prevent thermal or heat conduction between the first and second plate members 10 and 20. A sealing or welding part 61 may seal the conductive resistance sheets 60 and 63 to the the first and second plate members 10 and 20 such that the vacuum space part 50 is in a sealed or vacuum state.

When the vacuum adiabatic body is applied to a refrigerator or a warming apparatus, the first plate member 10 providing a wall of an inner space of the refrigerator may be referred to as an inner case, and the second plate member 20 providing a wall of an outer space of the refrigerator may be referred to as an outer case.

A machine room 8 may include parts providing a refrigerating or a freezing cycle. The machine room may be placed at a lower rear side of the main body-side vacuum adiabatic body, and an exhaust port 40 to form a vacuum state by exhausting air from the vacuum space part 50 is provided at any one side of the vacuum adiabatic body. In addition, a pipeline 64 passing through the vacuum space part 50 may be further installed so as to install a defrosting water line and electric lines.

The first plate member 10 may define at least one portion of a wall for a first space provided thereto. The second plate member 20 may define at least one portion of a wall for a second space provided thereto. The first space and the second space may be defined as spaces having different temperatures. Here, the wall for each space may serve as not only a wall directly contacting the space but also a wall not contacting the space. For example, the vacuum adiabatic body of the embodiment may also be applied to a product further having a separate wall contacting each space.

Factors of heat transfer, which cause loss of the adiabatic effect of the vacuum adiabatic body, are thermal or heat conduction between the first and second plate members 10 and 20, heat radiation between the first and second plate members 10 and 20, and gas conduction of the vacuum space part 50.

Hereinafter, a heat resistance unit or assembly provided to reduce adiabatic loss related to the factors of the heat transfer will be provided. The vacuum adiabatic body and the refrigerator of the embodiment do not exclude that another adiabatic means is further provided to at least one side of the vacuum adiabatic body. Therefore, an adiabatic means using foaming or the like may be further provided to another side of the vacuum adiabatic body.

The heat resistance unit may include a conductive resistance sheet 60 or 63 that resists conduction of heat transferred along a wall of a third space 50 and may further include a side frame coupled to the conductive resistance sheet. The conductive resistance sheet 60 or 63 and the side frame will be clarified by the following description.

Also, the heat resistance unit may include at least one radiation resistance sheet 32 that is provided in a plate shape within the third space 50 or may include a porous material that resists radiation heat transfer between the second plate member 20 and the first plate member 10 within the third space 50. The radiation resistance sheet 32 and the porous material will be clarified by the following description.

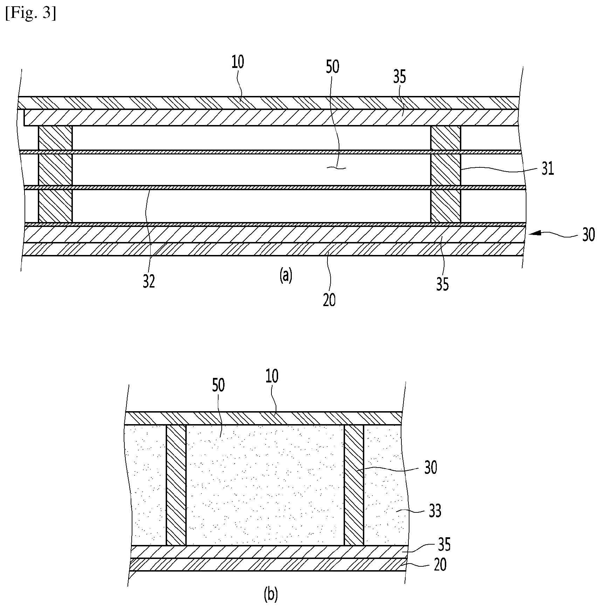

FIGs. 3A - 3B are views illustrating various embodiments of an internal configuration of the vacuum space part or third space 50.

First, referring to FIG. 3A, the vacuum space part 50 may have a pressure different from that of each of the first and second spaces, preferably, a vacuum state, thereby reducing an adiabatic loss. The vacuum space part 50 may be provided at a temperature between the temperature of the first space and the temperature of the second space. Since the vacuum space part 50 is provided as a space in the vacuum state, the first and second plate members 10 and 20 receive a force contracted in a direction in which they approach each other due to a force corresponding to a pressure difference between the first and second spaces. Therefore, the vacuum space part 50 may be deformed in a direction in which a distance between the plate members is reduced. In this case, the adiabatic loss may be caused due to an increase in amount of heat radiation, caused by the contraction of the vacuum space part 50, and an increase in amount of thermal or heat conduction, caused by contact between the plate members 10 and 20.

The supporting unit or support 30 is provided to reduce deformation of the vacuum space part 50. The supporting unit 30 includes a bar 31. The bar 31 extends in a substantially vertical direction with respect to the plate members 10 and 20 to support a distance between the first plate member 10 and the second plate member 20. A support plate 35 may be additionally provided on at least any one end of the bar 31. The support plate 35 may connect at least two or more bars 31 to each other to extend in a horizontal direction with respect to the first and second plate members 10 and 20. The support plate 35 may be provided in a plate shape or may be provided in a lattice shape so that an area of the support plate contacting the first or second plate member 10 or 20 decreases, thereby reducing heat transfer. The bars 31 and the support plate 35 are fixed to each other at at least one portion, to be inserted together between the first and second plate members 10 and 20. The support plate 35 contacts at least one of the first and second plate members 10 and 20, thereby preventing deformation of the first and second plate members 10 and 20. In addition, based on the extending direction of the bars 31, a total sectional area of the support plate 35 is provided to be greater than that of the bars 31, so that heat transferred through the bars 31 may be diffused through the support plate 35.

A material of the supporting unit 30 will be described.

The supporting unit 30 may have a high compressive strength so as to endure the vacuum pressure , a low outgassing rate and a low water absorption rate so as to maintain the vacuum state , a low thermal conductivity so as to reduce the heat conduction between the plate members 10 and 20. Also, the supporting unit 30 may have a secure compressive strength at a high temperature so as to endure a high-temperature exhaust process , have an excellent machinability so as to be subjected to molding , and have a low cost for molding. Here, the time required to perform the exhaust process takes about a few days. Hence, the time is reduced, thereby considerably improving fabrication cost and productivity. Therefore, the compressive strength is to be secured at the high temperature because an exhaust speed is increased as a temperature at which the exhaust process is performed becomes higher. The inventor has performed various examinations under the above-described conditions.

First, ceramic or glass has a low outgassing rate and a low water absorption rate, but its machinability is remarkably lowered. Hence, ceramic and glass may not be used as the material of the supporting unit 30. Resin may be considered as the material of the supporting unit 30.

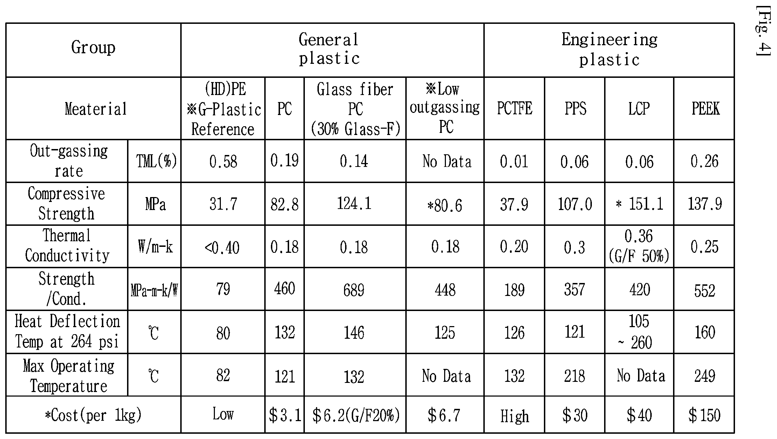

FIG. 4 is a diagram illustrating results obtained by examining resins.

Referring to FIG. 4, the present inventor has examined various resins, and most of the resins may not be used because their outgassing rates and water absorption rates are remarkably high. Accordingly, the present inventor has examined resins that approximately satisfy conditions of the outgassing rate and the water absorption rate. As a result, polyethylene (PE) may not be used due to its high outgassing rate and its low compressive strength. Polychlorotrifluoroethylene (PCTFE) may not be used due to its remarkably high price. Polyether ether ketone PEEK may not be used due to its high outgassing rate. A resin selected from the group consisting of polycarbonate (PC), glass fiber PC, low outgassing PC, polyphenylene sulfide (PPS), and liquid crystal polymer (LCP) may be used as the material of the supporting unit 30. However, an outgassing rate of PC is 0.19, which is at a low level. Hence, as the time required to perform baking in which exhaustion is performed by applying heat is increased to a certain level, PC may be used as the material of the supporting unit 30.

The present inventor has found an optimal material by performing various studies on resins expected to be used inside the vacuum space part 50. Hereinafter, results of the performed studies will be described with reference to the accompanying drawings.

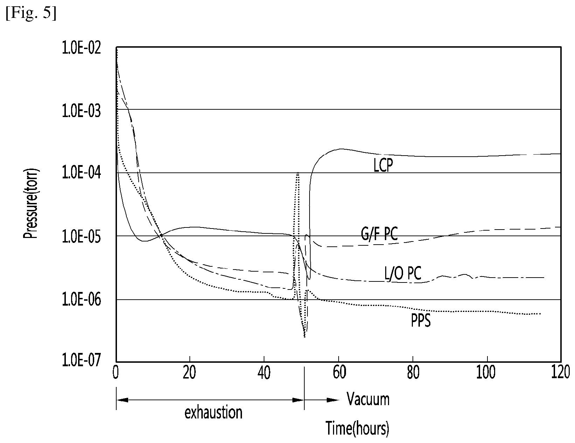

FIG. 5 is a view illustrating results obtained by performing an experiment on vacuum maintenance performances of the resins.

Referring to FIG. 5, there is illustrated a graph showing results obtained by fabricating the supporting unit 30 using the respective resins and then testing vacuum maintenance performances of the resins. First, a supporting unit 30 fabricated using a selected material was cleaned using ethanol, left at a low pressure for 48 hours, exposed to the air for 2.5 hours, and then subjected to an exhaust process at 90 °C for about 50 hours in a state where the supporting unit 30 was put in the vacuum adiabatic body, thereby measuring a vacuum maintenance performance of the supporting unit 30.

An initial exhaust performance of LCP is best, but its vacuum maintenance performance is bad. This may be caused by sensitivity of the LCP to temperature. Also, it is expected through characteristics of the graph that, when a final allowable pressure is $5 \times 10^{-3}$ Torr, its vacuum performance will be maintained for a time of about 0.5 years. Therefore, the LCP may not be used as the material of the supporting unit 30.

Regarding glass fiber PC (G/F PC), its exhaust speed is fast, but its vacuum maintenance performance is low. It is determined that this will be influenced by an additive. Also, it is expected through the characteristics of the graph that the glass fiber PC will maintain its vacuum performance under the same conditions for a time of about 8.2 years. Therefore, PC (G/F PC) may not be used as the material of the supporting unit 30.

It is expected that, in the case of the low outgassing PC (O/G PC), its vacuum maintenance performance is excellent, and its vacuum performance will be maintained under the same conditions for a time of about 34 years, as compared with the above-described two materials. However, it may be seen that the initial exhaust performance of the low outgassing PC is low, and therefore, the fabrication efficiency of the low outgassing PC is lowered.

It may be seen that, in the case of the PPS, its vacuum maintenance performance is remarkably excellent, and its exhaust performance is also excellent. Based on the vacuum maintenance performance, PPS may be used as the material of the supporting unit 30.

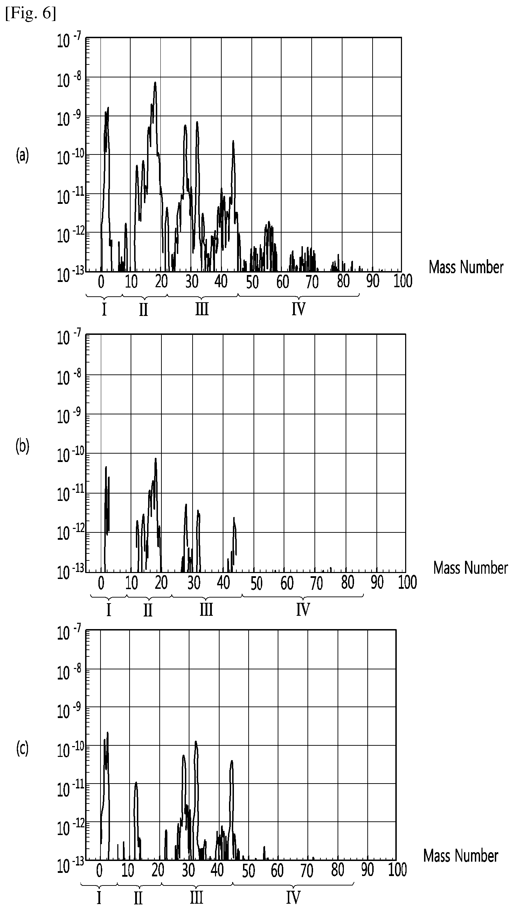

FIGS. 6A - 6C illustrate results obtained by analyzing components of gases discharged from the PPS and the low outgassing PC, in which the horizontal axis represents mass numbers of gases and the vertical axis represents concentrations of gases. FIG. 6A illustrates a result obtained by analyzing a gas discharged from the low outgassing PC. In FIG. 6A, it may be seen that hydrogen or $H_2$ series (I), water or $H_2O$ series (II), dinitrogen/carbon monoxide/carbon dioxide/oxygen or $N_2/CO/CO_2/O_2$ series (III), and hydrocarbon series (IV) are equally discharged. FIG. 6B illustrates a result obtained by analyzing a gas discharged from the PPS. In FIG. 6B, it may be seen that the $H_2$ series (I), $H_2O$ series (II), and $N_2/CO/CO_2/O_2$ series (III) are discharged to a weak extent. FIG. 6C is a result obtained by analyzing a gas discharged from stainless steel. In FIG. 6C, it may be seen that a similar gas to the PPS is discharged from the stainless steel. Consequently, it may be seen that the PPS discharges a similar gas to the stainless steel.

As the analyzed result, it may be re-confirmed that the PPS is excellent as the material of the supporting unit 30.

To further reinforce the strength of the supporting unit 30, a material added with glass fiber (G/F) of several tens%, preferably, G/F of 40% together with the PPS may be used. To better increase strength of a PPS+G/F 40% material used in the supporting unit 30, the PPS+G/F 40% material may be further subjected to a crystallization process (left under an atmosphere of 150°C or more for about 1 hour) as a post-treatment process after injection.

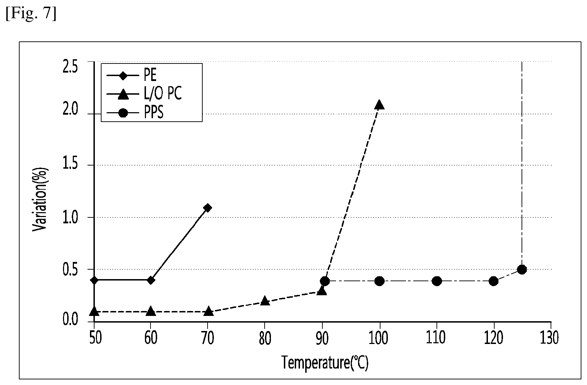

FIG. 7 illustrates results obtained by measuring maximum deformation temperatures at which resins are damaged by atmospheric pressure in high-temperature exhaustion. At this time, the bars 31 were provided at a diameter of 2 mm at a distance of 30 mm. Referring to FIG. 7, it may be seen that a rupture occurs at 60°C in the case of the PE, a rupture occurs at 90°C in the case of the low outgassing PC, and a rupture occurs at 125°C in the case of the PPS.

As the analyzed result, it may be seen that the PPS may be used as the resin used inside the vacuum space part 50. However, the low outgassing PC may be used in terms of fabrication cost.

Referring back to Figure 3A, a radiation resistance sheet 32 to reduce heat radiation between the first and second plate members 10 and 20 through the vacuum space part 50 will be described. The first and second plate members 10 and 20 may be made of a stainless material capable of preventing corrosion and providing a sufficient strength. The stainless material has a relatively high emissivity of 0.16, and hence a large amount of radiation heat may be transferred. In addition, the supporting unit 30 made of the resin has a lower emissivity than the plate members, and is not entirely provided to inner surfaces of the first and second plate members 10 and 20. Hence, the supporting unit 30 does not have great influence on radiation heat. Therefore, the radiation resistance sheet 32 may be provided in a plate shape over a majority of the area of the vacuum space part 50 so as to concentrate on reduction of radiation heat transferred between the first and second plate members 10 and 20. A product having a low emissivity may be used as the material of the radiation resistance sheet 32. In an embodiment, an aluminum foil having an emissivity of 0.02 may be used as the radiation resistance sheet 32. Also, since the transfer of radiation heat may not be sufficiently blocked using one radiation resistance sheet 32, at least two radiation resistance sheets 32 may be provided at a certain distance so as not to contact each other. Also, at least one radiation resistance sheet 32 may be provided in a state in which it contacts the inner surface of the first or second plate member 10 or 20.

Referring to FIG. 3B, the distance between the plate members 10 and 20 is maintained by the supporting unit 30, and a porous material 33 may be filled in the vacuum space part 50. The porous material 33 may have a higher emissivity than the stainless material of the first and second plate members 10 and 20. However, since the porous material 33 is filled in the vacuum space part 50, the porous material 33 has a high efficiency for resisting the radiation heat transfer.

In the present embodiment, the vacuum adiabatic body may be manufactured without the radiation resistance sheet 32.

Referring to FIG. 3C the supporting unit 30 to maintain the vacuum space part 50 may not be provided. A porous material 333 may be provided to be surrounded by a film 34 instead of the supporting unit 30. Here, the porous material 33 may be provided in a state of being compressed so that the gap of the vacuum space part 50 is maintained. The film 34 made of, for example, a PE material provided in a state in which a hole is punched in the film 34.

In the present embodiment, the vacuum adiabatic body may be manufactured without the supporting unit 30. That is to say, the porous material 33 may perform the function of the radiation resistance sheet 32 and the function of the supporting unit 30 together.

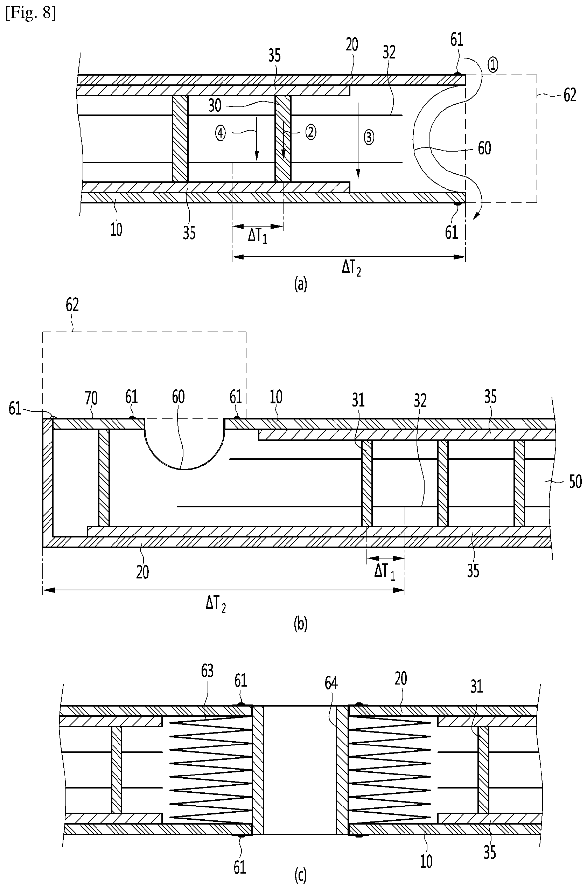

FIGs. 8A - 8C are views showing various embodiments of conductive resistance sheets 60 or 63 and peripheral parts thereof. Structures of the conductive resistance sheets 60 or 63 are briefly illustrated in FIG. 2, but will be understood in detail with reference to the drawings.

First, a conductive resistance sheet 60 proposed in FIG. 8A may be applied to the main body-side vacuum adiabatic body. Specifically, the first and second plate members 10 and 20 may be sealed so as to vacuumize the interior of the vacuum adiabatic body. In this case, since the first and second plate members 10 and 20 have different temperatures from each other, heat transfer may occur between the first and second plate members 10 and 20. A conductive resistance sheet 60 is provided to prevent thermal or heat conduction between two different kinds of plate members 10 and 20.

The conductive resistance sheet 60 may be provided with sealing or welding parts 61 at which both ends of the conductive resistance sheet 60 are sealed to define at least one portion of the wall for the third space or vacuum space part 50 and maintain the vacuum state. The conductive resistance sheet 60 may be provided as a thin foil in unit of micrometer so as to reduce the amount of heat conducted along the wall for the vacuum space part 50. The sealing part 61 may be provided as welding parts , and the conductive resistance sheet 60 and the plate members 10 and 20 may be fused to each other. In order to cause a fusing action between the conductive resistance sheet 60 and the first and second plate members 10 and 20, the conductive resistance sheet 60 and the first and second plate members 10 and 20 may be made of the same material (e.g., a stainless material ). The sealing part 61 is not limited to the welding part, and may be provided through a process such as cocking. The conductive resistance sheet 60 may be provided in a curved shape. Thus, a thermal or heat conduction distance of the conductive resistance sheet 60 is provided longer than the linear distance of each plate member 10 and 20, so that the amount of thermal or heat conduction may be further reduced.

A change in temperature occurs along the conductive resistance sheet 60. Therefore, in order to block heat transfer to the exterior of the conductive resistance sheet 60, a shielding part 62 may be provided at the exterior of the conductive resistance sheet 60 such that an adiabatic action occurs. In other words, in the refrigerator 1, the second plate member 20 has a high temperature and the first plate member 10 has a low temperature. In addition, thermal or heat conduction from high temperature to low temperature occurs in the conductive resistance sheet 60, and hence the temperature of the conductive resistance sheet 60 is suddenly changed. Therefore, when the conductive resistance sheet 60 is opened to the exterior thereof, heat transfer through the opened place may seriously occur. In order to reduce heat loss, the shielding part 62 is provided at the exterior of the conductive resistance sheet 60. For example, when the conductive resistance sheet 60 is exposed to any one of the low-temperature space and the high-temperature space, the conductive resistance sheet 60 may not serve as a conductive resistor at the exposed portion.

The shielding part 62 may be provided as a porous material contacting an outer surface of the conductive resistance sheet 60. The shielding part 62 may be provided as an adiabatic structure, e.g., a separate gasket, which is placed at the exterior of the conductive resistance sheet 60. The shielding part 62 may be provided as a portion of the vacuum adiabatic body, which is provided at a position facing a corresponding conductive resistance sheet 60 when the main body-side vacuum adiabatic body is closed with respect to the door-side vacuum adiabatic body. In order to reduce heat loss even when the main body 2 and the door 3 are opened, the shielding part 62 may be provided as a porous material or a separate adiabatic structure.

A conductive resistance sheet 60 proposed in FIG. 8B may be applied to the door-side vacuum adiabatic body. In FIG. 8B, portions different from those of FIG. 8A are described in detail, and the same description is applied to portions identical to those of FIG. 8A. A side frame 70 is further provided at an outside of the conductive resistance sheet 60. A part or seal to seal between the door 3 and the main body 2, an exhaust port necessary for an exhaust process, a getter port for vacuum maintenance, and the like may be placed on the side frame 70. This is because the mounting of parts is convenient in the main body-side vacuum adiabatic body, but the mounting positions of parts are limited in the door-side vacuum adiabatic body.

In the door-side vacuum adiabatic body, it is difficult to place the conductive resistance sheet 60 at a front end portion of the vacuum space part 50, i.e., a corner side portion of the vacuum space part 50. This is because, unlike the main body 2, a corner edge portion of the door 3 is exposed to the exterior. In more detail, if the conductive resistance sheet 60 is placed at the front end portion of the vacuum space part 50, the corner edge portion of the door 3 is exposed to the exterior, and hence there is a disadvantage in that a separate adiabatic part should be configured so as to thermally insulate the conductive resistance sheet 60.

A conductive resistance sheet 63 proposed in FIG. 8C may be installed in the pipeline 64 passing through the vacuum space part 50. In FIG. 8C, portions different from those of FIGS. 8A and 8b are described in detail, and the same description is applied to portions identical to those of FIGS. 8A and 8B. A conductive resistance sheet 63 having a similar shape as that of FIG. 8A, such as a wrinkled or zig-zag conductive resistance sheet 63, may be provided at a peripheral portion of the pipeline 64. Accordingly, a heat transfer path may be lengthened, and deformation caused by a pressure difference may be prevented. In addition, a separate shielding part may be provided to improve the adiabatic performance of the conductive resistance sheet.

A heat transfer path between the first and second plate members 10 and 20 will be described with reference back to FIG. 8A. Heat passing through the vacuum adiabatic body may be divided into surface conduction heat ① conducted along a surface of the vacuum adiabatic body, more specifically, the conductive resistance sheet 60, supporter conduction heat ② conducted along the supporting unit 30 provided inside the vacuum adiabatic body, gas conduction heat ③ conducted through an internal gas in the vacuum space part, and radiation transfer heat ④ transferred through the vacuum space part.

The transfer heat may be changed depending on various depending on various design dimensions. For example, the supporting unit 30 may be changed such that the first and second plate members 10 and 20 may endure a vacuum pressure without being deformed, the vacuum pressure may be changed, the distance between the first and second plate members 10 and 20 may be changed, and the length of the conductive resistance sheet 60 or 63 may be changed. The transfer heat may be changed depending on a difference in temperature between the spaces (the first and second spaces) respectively provided by the plate members 10 and 20. In the embodiment, a configuration of the vacuum adiabatic body has been found by considering that its total heat transfer amount is smaller than that of a typical adiabatic structure formed by foaming polyurethane. In a typical refrigerator including the adiabatic structure formed by foaming the polyurethane, an effective heat transfer coefficient may be proposed as 19.6 mW/mK.

By performing a relative analysis on heat transfer amounts of the vacuum adiabatic body of the embodiment, a heat transfer amount by the gas conduction heat ③ may become the smallest. For example, the heat transfer amount by the gas conduction heat ③ may be controlled to be equal to or smaller than 4% of the total heat transfer amount. A heat transfer amount by solid conduction heat defined as a sum of the surface conduction heat ① and the supporter conduction heat ② is the largest. For example, the heat transfer amount by the solid conduction heat may reach 75% of the total heat transfer amount. A heat transfer amount by the radiation transfer heat ③ is smaller than the heat transfer amount by the solid conduction heat but larger than the heat transfer amount of the gas conduction heat. For example, the heat transfer amount by the radiation transfer heat ③ may occupy about 20% of the total heat transfer amount.

According to such a heat transfer distribution, effective heat transfer coefficients (eK: effective K) (W/mK) of the surface conduction heat ①, the supporter conduction heat ②, the gas conduction heat ③, and the radiation transfer heat ④ may have an order of Math Equation 1.

[Equation 1]

$$eK_{\text{solid conduction heat}} > eK_{\text{radiation transfer heat}} > eK_{\text{gas conduction heat}}$$

Here, the effective heat transfer coefficient (eK) is a value that may be measured using a shape and temperature differences of a target product. The effective heat transfer coefficient (eK) is a value that may be obtained by measuring a total heat transfer amount and a temperature at least one portion at which heat is transferred. For example, a calorific value (W) is measured using a heating source that may be quantitatively measured in the refrigerator, a temperature distribution (K) of the door is measured using heats respectively transferred through a main body and an edge of the door of the refrigerator, and a path through which heat is transferred is calculated as a conversion value (m), thereby evaluating an effective heat transfer coefficient.

The effective heat transfer coefficient (eK) of the entire vacuum adiabatic body is a value given by k=QL/A$\Delta$T. Here, Q denotes a calorific value (W) and may be obtained using a calorific value of a heater. A denotes a sectional area ($m^2$) of the vacuum adiabatic body, L denotes a thickness (m) of the vacuum adiabatic body, and $\Delta$T denotes a temperature difference.

For the surface conduction heat, a conductive calorific value may be obtained through a temperature difference ($\Delta$T) between an entrance and an exit of the conductive resistance sheet 60 or 63, a sectional area (A) of the conductive resistance sheet, a length (L) of the conductive resistance sheet 60 or 63, and a thermal conductivity (k) of the conductive resistance sheet 60 or 63 (the thermal conductivity of the conductive resistance sheet is a material property of a material and may be obtained in advance). For the supporter conduction heat, a conductive calorific value may be obtained through a temperature difference ($\Delta$T) between an entrance and an exit of the supporting unit 30, a sectional area (A) of the supporting unit 30, a length (L) of the supporting unit 30, and a thermal conductivity (k) of the supporting unit 30. Here, the thermal conductivity of the supporting unit 30 is a material property of a material and may be obtained in advance. The sum of the gas conduction heat ③, and the radiation transfer heat ④ may be obtained by subtracting the surface conduction heat and the supporter conduction heat from the heat transfer amount of the entire vacuum adiabatic body. A ratio of the gas conduction heat ③, and the radiation transfer heat ④ may be obtained by evaluating radiation transfer heat when no gas conduction heat exists by remarkably lowering a vacuum degree of the vacuum space part 50.

When a porous material is provided inside the vacuum space part 50, porous material conduction heat ⑤ may be a sum of the supporter conduction heat ② and the radiation transfer heat ④. The porous material conduction heat may be changed depending on various variables including a kind, an amount, and the like of the porous material.

According to an embodiment, a temperature difference $\Delta T_1$ between a geometric center formed by adjacent bars 31 and a point at which each of the bars 31 is located may be preferably provided to be less than 0.5°C. Also, a temperature difference $\Delta T_2$ between the geometric center formed by the adjacent bars 31 and an edge portion of the vacuum adiabatic body may be preferably provided to be less than 0.5°C. In the second plate member 20, a temperature difference between an average temperature of the second plate member 20 and a temperature at a point at which a heat transfer path passing through the conductive resistance sheet 60 or 63 meets the second plate member 20 may be the largest. For example, when the second space is a region hotter than the first space, the temperature at the point at which the heat transfer path passing through the conductive resistance sheet 60 or 63 meets the second plate member 20 becomes lowest. Similarly, when the second space is a region colder than the first space, the temperature at the point at which the heat transfer path passing through the conductive resistance sheet 60 or 63 meets the second plate member 20 becomes highest.

This means that the amount of heat transferred through other points except the surface conduction heat passing through the conductive resistance sheet 60 or 63 should be controlled, and the entire heat transfer amount satisfying the vacuum adiabatic body may be achieved only when the surface conduction heat occupies the largest heat transfer amount. To this end, a temperature variation of the conductive resistance sheet 60 or 63 may be controlled to be larger than that of the plate members 10 and 20.

Physical characteristics of the parts constituting the vacuum adiabatic body will be described. In the vacuum adiabatic body, a force by vacuum pressure is applied to all of the parts. Therefore, a material having a strength ($N/m^2$) of a certain level may be preferably used.

Under such conditions, the plate members 10 and 20 and the side frame 70 may be made of a material having a sufficient strength with which they are not damaged by even vacuum pressure. For example, when the number of bars 31 is decreased so as to limit the support conduction heat, deformation of the plate members 10 and 20 may occur due to the vacuum pressure, which may bad influence on the external appearance of refrigerator. The radiation resistance sheet 32 may be made of a material that has a low emissivity and may be easily subjected to thin film processing. Also, the radiation resistance sheet 32 is to ensure a strength strong enough not to be deformed by an external impact. The supporting unit 30 is provided with a strength strong enough to support the force by the vacuum pressure and endure an external impact, and is to have machinability. The conductive resistance sheet 60 may be made of a material that has a thin plate shape and may endure the vacuum pressure.

In an embodiment, the plate members 10 and 20, the side frame 70, and the conductive resistance sheet 60 or 63 may be made of stainless materials having the same strength. The radiation resistance sheet 32 may be made of aluminum having a weaker strength that the stainless materials. The supporting unit 30 may be made of resin having a weaker strength than the aluminum.

Unlike the strength from the point of view of materials, analysis from the point of view of stiffness is required. The stiffness (N/m) is a property that would not be easily deformed. Although the same material is used, its stiffness may be changed depending on its shape. The conductive resistance sheets 60 or 63 may be made of a material having a high or predetermined strength, but the stiffness of the material may be low so as to increase heat resistance and minimize radiation heat as the conductive resistance sheet 60 or 63 is uniformly spread without any roughness when the vacuum pressure is applied. The radiation resistance sheet 32 requires a stiffness of a certain level so as not to contact another part due to deformation. Particularly, an edge portion of the radiation resistance sheet 32 may generate conduction heat due to drooping caused by the self-load of the radiation resistance sheet 32. Therefore, a stiffness of a certain level is required. The supporting unit 30 may require a stiffness strong enough to endure a compressive stress from the plate members 10 and 20 and an external impact.

In an embodiment, the plate members 10 and 20 and the side frame 70 may have the highest stiffness so as to prevent deformation caused by the vacuum pressure. The supporting unit 30, particularly, the bar 31 may have the second highest stiffness. The radiation resistance sheet 32 may have a stiffness that is lower than that of the supporting unit 30 but higher than that of the conductive resistance sheet 60 or 63. Lastly, the conductive resistance sheet 60 or 63 may be made of a material that is easily deformed by the vacuum pressure and has the lowest stiffness.

Even when the porous material 33 is filled in the vacuum space part 50, the conductive resistance sheet 60 or 63 may have the lowest stiffness, and the plate members 10 and 20 and the side frame 70 may have the highest stiffness.

The vacuum space part 50 may resist heat transfer by only the supporting unit 30. Here, a porous material 33 may be filled with the supporting unit 30 inside the vacuum space part 50 to resist to the heat transfer. The heat transfer to the porous material 33 may resist without applying the supporting unit 30.

In the above description, as a material suitable for the supporting unit 30, a resin of PPS has been proposed. The bar 31 is provided on the support plate 35 at gaps of 2 cm to 3 cm, and the bar 31 has a height of 1 cm to 2 cm. These resins often have poor fluidity of the resin during the molding. In many cases, the molded article does not have the designed value. Particularly, the shape of a molded product such as a bar 31 having a short length is often not provided properly due to non-uniform injection of resin into a part far from the liquid injection port of the liquid.

This may cause damage of the supporting unit 30 or a defective vacuum adiabatic body later.

The supporting unit 30 is a substantially two-dimensional structure, but its area is considerably large. Therefore, if a defect occurs in one of the portions, it is difficult to discard the entire structure. This limitation becomes even more pronounced as refrigerators and warming apparatus are becoming larger in size to meet the needs of consumers.

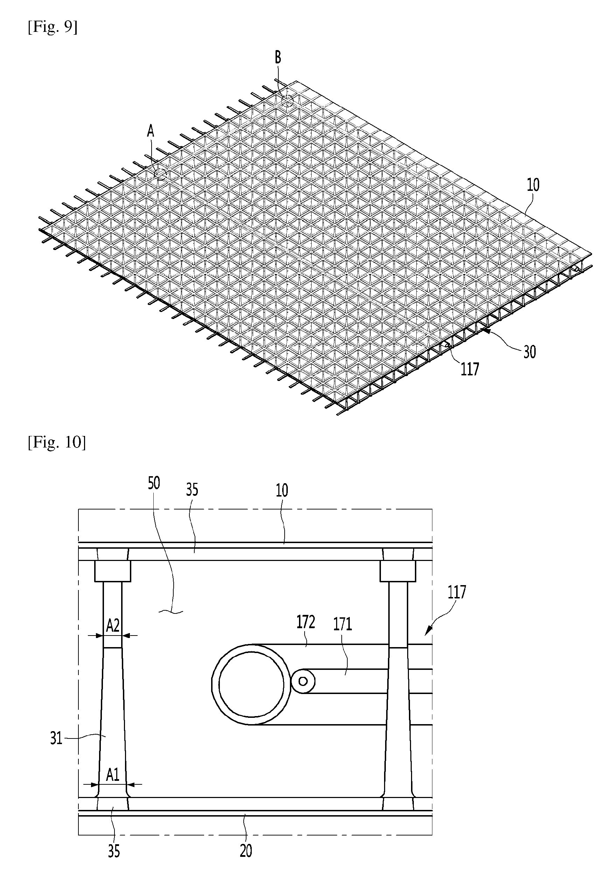

Referring to Figures 9 and 10, a heat exchange pipeline 117 may be provided in the internal space of the vacuum adiabatic body, i.e., the vacuum space part 50. The heat exchange pipeline 117 may be provided by allowing an inlet pipe 171 through which the refrigerant is introduced into an evaporator provided in the refrigerator to contact an outlet pipe 172 through which the refrigerant is discharged from the evaporator. Two pipelines that are the inlet pipe 171 and the outlet pipe 172 may be bonded to each other through welding. The refrigerant flowing through the inlet pipe 171 and the outlet pipe 172 may be heat-exchanged with each other to improve efficiency of a refrigeration cycle.

An operation and configuration in a state in which the heat exchange pipeline is provided in the vacuum space part will be described below.

First, an embodiment in which a porous material 33 is filled into the third space 50 as illustrated in FIGS. 3B and 3C will be described. In this case, a heat exchange pipeline 117 may be inserted into the third space, and then, the porous material 33 may be filled into the third space. Here, the porous material 33 may be filled into a region within the third space except for the heat exchange pipeline 117 to improve adiabatic performance. Particularly, in the case of FIG. 3C, the porous material 33 may serve to surround a position of the heat exchange pipeline 117 and also maintain a gap of the third space as the supporting unit 30.

Alternatively, when the porous material 33 is processed into an object having a predetermined shape at the outside, the porous material 33 and the heat exchange pipeline 117 may be provided first as a single body. Thereafter, the single body of the porous material 33 and the heat exchange pipeline 117 may be inserted into the third space.

In the case of FIG. 3B, the vacuum space part 50 may fix a position of the heat exchange pipeline and the supporting unit 30. The supporting unit 30 including the bar 31 may be separately provided.

Hereinafter, as illustrated in FIGS. 3A and 3B, an operation and configuration of the heat exchange pipeline 117 in the vacuum space part 50 will be described as an embodiment that is preferably applied to when the supporting unit 30 including the bar 31 is provided.

FIG. 9 is a partial cutaway view of the vacuum adiabatic body, and FIG. 10 is a view illustrating a state in which the heat exchange pipeline 117 is provided in the vacuum space part 50.

Referring to FIGS. 9 and 10, the supporting unit 30 is provided between the plate members 10 and 20. The supporting unit 30 includes a support panel or plate 35 contacting the plate members 10 and 20 and at least two or more bars 31 maintaining an interval or distance between the plate members 10 and 20.

Each of the bars 31 may have a conical or tapered shape such that a lower portion may have a greater cross-sectional area A1 than a cross-sectional area A2 of an upper portion thereof in the drawing. As a result, high molding processability may be secured.

The heat exchange pipeline 117 may avoid contact with other members in the vacuum space part 50 as much as possible. When a pipeline made of a metal, for example, copper contacts the other member, heat exchange efficiency may be deteriorated due to thermal conduction, and thus, the adiabatic performance may not be realized. Particularly, the bonding between the metals of the plate member 10 and/or 20 and the heat exchange pipeline 117 may cause a sharp or quick heat loss or transfer.

The heat exchange pipeline 117 may be provided so as not to contact any plate member 10 or 20 and/or the supporting unit at a gap between the bars 31 in the horizontal direction in the vacuum space part 50 between the plate members 10 and 20 in the vertical direction. Thus, the occurrence of the heat loss or transfer due to the contact between the heat exchange pipeline 117 and the plate members 10 and 20 may be prevented.

The heat exchange pipeline 117 may be made of a material having relatively low rigidity, for example, copper. Thus, the heat exchange pipeline 117 may be weak against an external impact or force. When the heat exchange pipeline 117 is bent, any unintentional force in one direction may lead to deformation of the heat exchange pipeline 117 to cause contact with the internal component of the vacuum space part 50. This limitation may also be caused by an external impact. Thus, the heat exchange pipeline 117 may be supported by a guide member.

To guide the heat exchange pipeline 117 so as to be spaced apart from plate members 10 and 20 and/or the supporting unit 30, a spacing member is provided in the vacuum space part 50. The spacing member may be provided on a bent portion or section at the entire position of the heat exchange pipeline 117. The bent portion may correspond to each of areas A and B of FIG. 9.

Hereinafter, the spacing member will be described.

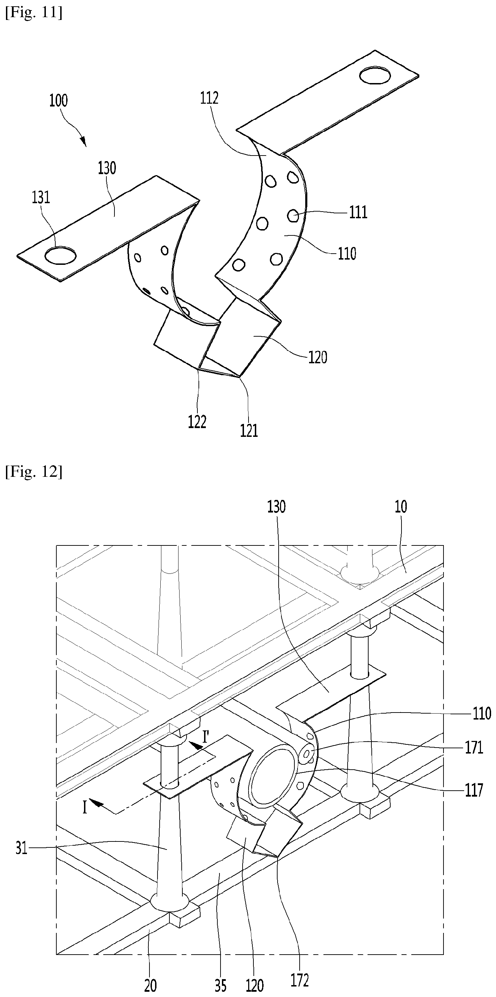

FIG. 11 is a perspective view of a spacing member 100 according to an embodiment.

Referring to FIGs. 10 and 11, the spacing member 100 includes a supporting part or guide 110 accommodating the heat exchange pipeline 117 therein and a pair of wings 130 extending in opposite directions from an upper portion of the support part 110 so as to restrict the movement of the heat exchange pipeline 117. An insertion hole 131 into which the bar 31 is inserted is provided in the wing 130.

The spacing member 100 may be provided as a thin metal plate and made of thin stainless steel having a thickness of about 0.1 mm to about 0.5 mm. The stainless steel may be used to reduce outgassing within the vacuum space part 50 and have a thin thickness to minimize a conductive heat transfer amount. The spacing member 100 may be manufactured by pressing a thin plate extending in one direction. Since the spacing member 100 is made of a long plate-shaped metal in one direction, elastic deformation may be allowed in a certain range, and permanent deformation may be made when the elastic deformation limit is exceeded.

The supporting part 110 may have a smoothly bent or curved cross-sectional shape and may be provided to surround the heat exchange pipeline 117. As a result, the movement of the heat exchange pipeline 117 between sides of the supporting part 110 may be restricted by the supporting part 110. A plurality of small protrusions 111 may be provided on a surface of the supporting part 110. The protrusions 111 may minimize a contact area between the heat exchange pipeline 117 and the supporting part 110 through point contact to minimize heat transfer therebetween. This allows heat to be transferred only between the two pipelines 171 and 172 constituting the heat exchange pipeline 117 to maximize the heat exchange performance.

An upper end of the supporting part 110 is narrowed to form a recess groove or opening 112. The recess groove 112 may be expanded by deformation of the supporting part 110 to allow insertion of the heat exchange pipeline 117. The spacing member 100 may include a conductive resistance part 120 having an opening or gap provided at an opposite side of the recess groove 112 to face the recess groove 112, and the opening of the conductive resistance part 120 may be expanded by deformation of the supporting part 110 and/or a bending part 122 described later. Since the recess groove 112 is contracted in the absence of external force, the heat exchange pipeline 117, once inserted, may not be removed through the recess groove 112 without applying an external force to deform the supporting part 110.

The wing 130 may allow the installed position of the supporting part 110 to be supported with respect to the bar 31.

For this, the wings 120 and 121 may extend up or out to a position at which the bar 31 is placed or positioned. That is to say, force supporting the heat exchange pipeline 117 may be provided by the bar 31. Alternatively, it may be understood that the force supporting the heat exchange pipeline 117 is provided via the supporting part 110 and the wings 120 and 121.

The bar 31 may be inserted into the insertion hole 131 so that the installation position of the spacing member 100 is supported. Since the spacing member 100 is made of a metal having small plasticity, and the bar 31 is made of a resin having high plasticity, the spacing member 100 and the bar 31 may contact each other at a certain position of the insertion hole 131 and the bar 31, but this may not be desirable in terms of thermal conduction. Thus, an inner diameter of the insertion hole 131 may be about 1.1 times to about 1.3 times of an outer diameter of the bar 31 at the installation position of the spacing member 100. Such a difference in size may serve to facilitate the insertion of the bar 31 into the spacing member 100 and to support the spacing member 100 when the spacing member 100 is deformed by an external force.

The conductive resistance part 120 may be provided on a lower portion of the supporting part 110. The conductive resistance part 120 may be narrower than each of the supporting part 110 and the wing 130 to reduce the conduction heat transfer amount. On the other hand, the supporting part 110 and the wing 130 may be provided with a larger width than that of the conduction resistance part 120 so that the heat exchange pipeline 117 supports large force.

The conductive resistance part 120 is bent in a cross-sectional shape to have a bent part 122 and a contact part 121. As shown in FIG. 11, the bent part 122 and the contact part 121 may have an angular cross-sectional shape to resemble a portion of a square or rectangle. This is for the conductive resistance part 120 to function as a spring. In the drawings, although one bending part 122 is disposed on both left and right sides, the embodiment is not limited thereto. For example, the total of 2n+1 (where n is a natural number) bending parts 122 may be provided to perform the role of the spring against the external force in the left/right balanced state.

A contact part 121 is provided at the lowermost side of the conductive resistance part 120 to contact the support plate 35, thereby supporting the spacing member 100 as a whole. Here, it may be also conceivable that the spacing member 100 receives external force by the heat exchange pipeline 117. The contact part 121 may be provided together at the time of manufacturing the bending part 122 on each of both the left and right sides as one of the bending parts 122. Since the contact part 121 is provided in a linear shape or plate shape like the bending part 122, when the contact part 121 contacts the support plate 35, a contact area may be minimized as a linear contact part 121 to reduce the conductive heat transfer amount. The bending part 122 may be inclined outward, while the contact part 121 may be inclined inward. The bending part 122 and the contact part 121 may be coupled to form a corner or vertex.

FIG. 12 is a perspective view illustrating a state in which the spacing member 100 according to the embodiment of FIG. 11 is installed.

Referring to FIG. 12, the heat exchange pipeline 117 is seated through the expanded recess groove 112. The wing 130 is supported by the bar 31. For example, the bar 31 is inserted into the insertion hole 131. The contact part 121 may point-contact the support plate 35 to support the spacing member 100. The conductive resistance part 120 is provided to be narrower than a width of the supporting part 110 so as to suppress the thermal conduction, and a plurality of bending parts 122 are provided to serve as springs.

The expanding action of the recess groove 112 may be restricted when the heat exchange pipeline 117 is inserted into the recess groove 112, and the wing 130 is supported by the bar 31. This is because the wing 130 is hooked on the bar 131 to restrict the expansion. Thus, even if the heat exchange pipeline 117 mounted once moves upward, the heat exchange pipeline 117 may be fixed without separation.

Although not shown in FIG. 12, a radiation resistance sheet 32 (FIG. 3A) may be provided inside the vacuum space part 50, which is provided with a predetermined cutaway part so as not to contact the spacing member 100.

Various methods of installing the spacing member 100 on the vacuum adiabatic body will be described.

A first method is as follows. First, the spacing member 100, the supporting unit 30, and the heat exchange pipeline 117 may be assembled to manufacture an assembly. In a state in which a first plate member 10 and a second plate member 20 are temporarily separated, the assembly is inserted into a gap between the plate members 10 and 20. Thereafter, a third space may be sealed from external other spaces, and then, a gas within the third space may be exhausted.

A second method is as follows. First, the spacing member 100, the supporting unit 30, and the heat exchange pipeline 117 may be assembled to manufacture an assembly. The assembly is seated on one plate member 10 or 20, and the other plate member 20 or 10 is coupled to the one plate member 10 or 20. Then, the third space is sealed from the external outer spaces. Then, the gas within the third space may be exhausted.

All the first method and the second method may be methods for manufacturing the assembly and performed as follows. First, the heat exchange pipeline 117 is inserted into the spacing member 100. The spacing member 100 may move to a proper position so as to be seated on the supporting member. As alternative method, the spacing member 100 is seated on the supporting unit 30. The recess groove 112 of the spacing member 100 may be spread so that the heat exchange pipeline 117 is inserted into the supporting part 110.

A third method is as follows. First, in a state in which the heat exchange pipeline 117 is provided in one plate member 10 or 20, the heat exchange pipeline 117 may be inserted into the supporting part 110 of the spacing member 100. Here, the spacing member 100 may be in the state of being coupled to the supporting unit 30 or not yet coupled to the supporting unit 30. Thereafter, the other plate member 20 or 10 may be coupled to the one plate member, and the third space may be sealed from external other spaces. Then, the gas within the third space may be exhausted.

The spacing member 100 is made of a metal material and has predetermined strength. Thus, the bar 31 may be inserted into the spacing member 100 and the radiation resistance sheet so as to be coupled.

Here, the spacing member 100 and the radiation resistance sheet 32 may contact each other to cause thermal conduction. However, in this case, the spacing member 100 is spaced apart from the plate member 10 or 20, and a bending part 122 that line-contacts the supporting unit 30 is provided on one side of the supporting part 110 provided in the spacing member 100. Thus, there is almost no an adiabatic loss of the adiabatic space.

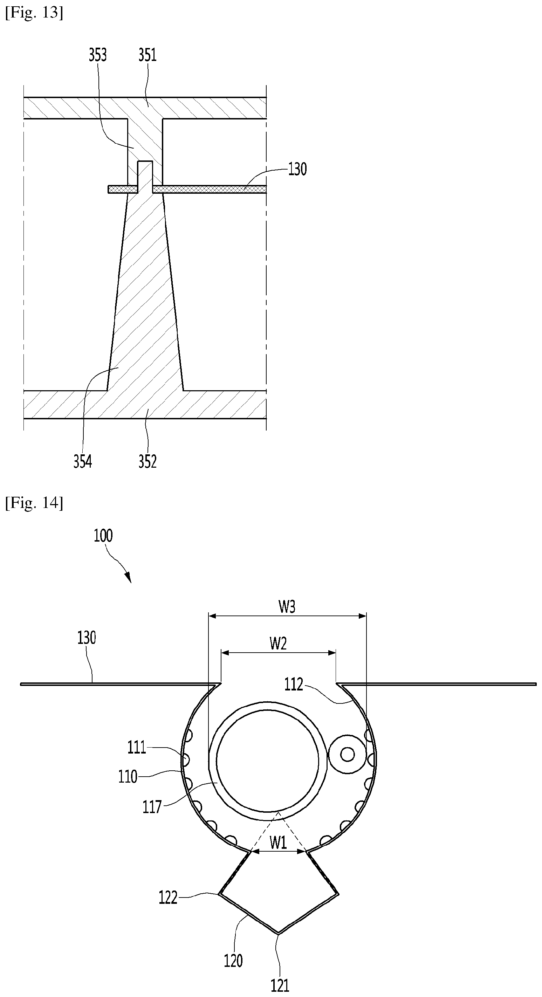

FIG. 13 is a cross-sectional view taken along line I-I' of FIG. 12.

Referring to FIG. 13, the supporting unit 30 includes a first support plate 351 to which a first bar 353 is connected and a second support plate 352 to which a second bar 354 is connected. Also, although the pair of bars 353 and 354 and support plates 351 and 352, which are connected to each other, are shown as one body in the drawings, the embodiment is not limited thereto, and the different articles may be coupled or integrated after molding.

The first bar 353 and the second bars 354 may be coupled to each other to form one body. Here, portions coupled to each other at the end portions of the bars 353 and 354 may provide a coupling surface. The insertion hole 131 and a portion of the wing 30 surrounding the insertion hole 131 may be supported by the coupling surface between the first and second bars 353 and 354. Thus, the wing 130 associated with the insertion hole 131 does not move in any direction of upward and downward directions due to the coupling surface provided in the gap between the first bar 353 and the second bar 354, and thus, its position may be fixed. As a result, the spacing member may not vertically move but be fixed.

FIG. 14 is a front view illustrating the spacing member of FIG. 11.

Referring to FIG. 14, since an interval or width w1 of a lower end of the supporting part 110 in the gap of the conductive resistance part 120 is less than an interval or width w3 of the heat exchange pipeline 117, the heat exchange pipeline 117 is not separated downward from or moved below the supporting part 110. Since an interval or width w2 of the recessed groove 112 is less than the interval w3 of the heat exchange pipeline 117, the heat exchange pipeline 117 is not separated upward from or moved above the supporting part 110.

As described above, since the heat exchange pipeline 117 does not directly contact the surface of the supporting part 110 but contacts only the protrusion 111, a contact area may be reduced. Thus, the thermal conduction between the heat exchange pipeline 117 and the supporting part 110 may be reduced, and the adiabatic loss of the heat exchange pipeline 117 may be reduced. Since the inside of the vacuum space part 50 is in a vacuum state, and there is almost no convective heat transfer, the adiabatic loss of the heat exchange pipeline 117 may be most affected by the conductive heat transfer, and the influence of the conductive heat transfer is significantly reduced.

Downward movement of the spacing member 100 may be restricted and supported by contact between the contact part 121 and the support plate 35, but movement in the upward direction may be allowed. To prevent this phenomenon, another spacing member 100 may be inserted onto the bar 31 and be supported by the heat exchange pipeline 117 in a state where the other spacing member 100 has a predetermined gap along the heat exchange pipeline 117 with the up and down direction changed. That is to say, one of the spacing members may contact the upper support plate 35 of the contact part 121, and the other spacing member 100 spaced a predetermined distance from the spacing member 100 may contact the lower support plate 35.

Another embodiment of the spacing member capable of eliminating the aforementioned inconvenience will be described.

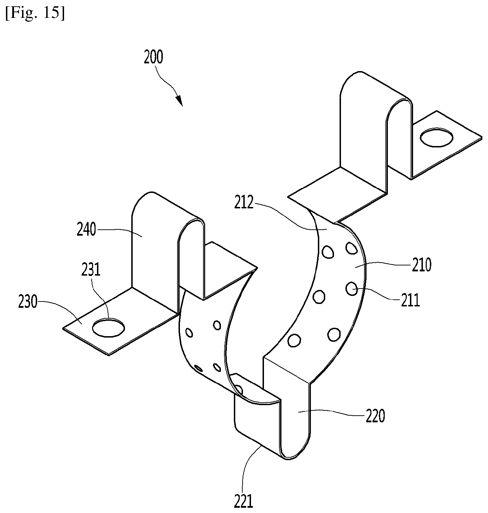

FIG. 15 is a perspective view of a spacing member 200 according to another embodiment. This embodiment is similar to the spacing member 100 shown in FIG. 11 and differs in a bending part and a wing. Thus, the same portion as those of FIGS. 11 to 14 will be similarly applied to the description related to the drawings.

Referring to FIG. 15, a supporting part or guide 210, a protrusion 211, a wing 230, an insertion hole 231, a recess groove 212, and a conductive resistance part 220 are provided in the spacing member 200 according to another embodiment and perform the same operation as those of the previously described embodiment.

The conductive resistance part 220 is provided with a narrow width as compared with the supporting part 210 to reduce thermal conduction and serve as a spring. The conductive resistance part 220 forms a lower support bending or contact part 221 bent or rounded in place, unlike the previous embodiment.

The lower support bending part 221 has a shape in which a long end extending downward is smoothly bent. An end portion of the lower support bending part 221 may reduce an amount of heat transferred by contacting the support plate 35.

The lower support bending part 221 does not include an angled bending part. When bending the metal plate, it may be difficult to obtain a bent angle to a desired angle in press processing. To solve this limitation, the lower support bending part 221 may have a predetermined rounded shape or a shape having a predetermined curvature in the press processing so that it is possible to provide the spacing member 200 in a designed and convenient shape.

Each of the pair of wings 230 is provided with an upper support bending or contact part 240. The upper support bending part 240 may be a member extending in a direction different from or opposite to the lower support bending part 220 and may restrict the movement of the spacing member 200 in the other direction by contacting the support plate 35.

The mounted position of the spacing member 200 may remain unchanged at the original set position of the vacuum adiabatic body by the supporting action of the support bending parts 221 and 240.

According to this embodiment, the process of installing the spacing member 200 may be more convenient.

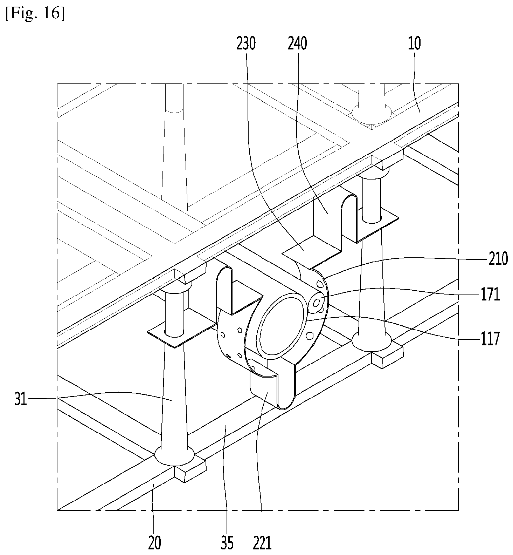

FIG. 16 is a perspective view illustrating a state in which the spacing member 200 is installed according to the embodiment of FIG. 15.

Referring to FIG. 16, it is seen that the support bending parts 221 and 240 line-contacts the upper and lower support plates 35. Thus, the movement of the spacing member 200 in the up and down directions may be absorbed by the support bending parts 221 and 240 so that the movement is restricted. The movement of the spacing member 200 in the left and right directions and the front and rear directions may be limited by the mutual support action between the wing 230 and the bar 31.

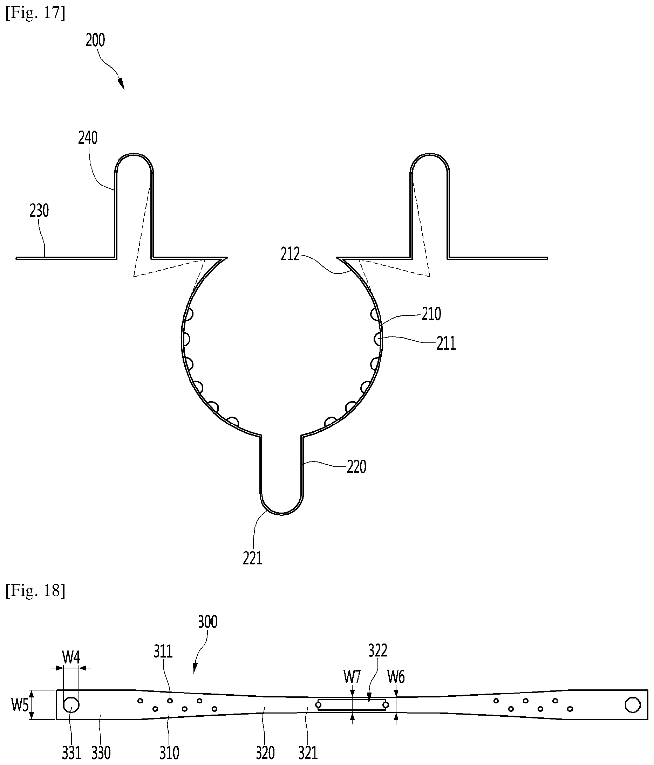

FIG. 17 is a front view illustrating another example of the spacing member 200 of FIG. 15.

Referring to FIG. 17, the lower support bending part 221 has a larger strength than the strength given by the bending part 122 of the conductive resistance part 120 of the spacing member 100 of FIG. 14. Thus, it may be difficult to expand or deform the recess groove 212 when inserting the heat exchange pipeline 117.

As a means to overcome this difficulty, the upper support bending part 240 may act. The upper support bending part 240 may be deformed as shown by a dotted line with the lower support bending part 221 when the recess groove 212 is expanded or deformed. Thus, only the lower support bending part 221 may be extended or deformed insufficiently, and the operation is facilitated.

Since the support bending parts 221 and 240 are rounded and bent, permanent deformation, that is, flat deformation may occur due to the continuous dynamic load. In this case, the contact part between the support bending parts 221 and 240 and the support plate 35 may be widened, and the thermal conduction amount may increase.

An embodiment capable of coping with deformation of the support bending parts 221 and 240 will be described below.

FIG. 18 is a development top view of a spacing member 300 according to another embodiment. Here, the development view means a plate material before being pressed.

Referring to FIG. 18, the plate member provided as the spacing member 300 according to another embodiment may include a supporting member or guide 310, a lower support bending member 321, a conductive resistance member 320, a protrusion 311, a wing 330, and an insertion hole 331. The portion corresponding to the upper bending part is not shown, but it may be easily provided.

A slit 322 is provided in a central portion of the spacing member 300. The support plate 35 is inserted into the slit 322. The slit 322 has a width w7 less than a width w6 of the lower support bending part 321. The slit 322 extends from the inside or center of the lower bending part 321 in a longitudinal direction of the lower bending part 321.

Thus, an inner surface of the slit 322 line-contacts a side surface of the support plate 35. The line contact between the slit 322 and the support plate 35 may be maintained even though the lower support bending part 321 is spread in a flat shape.

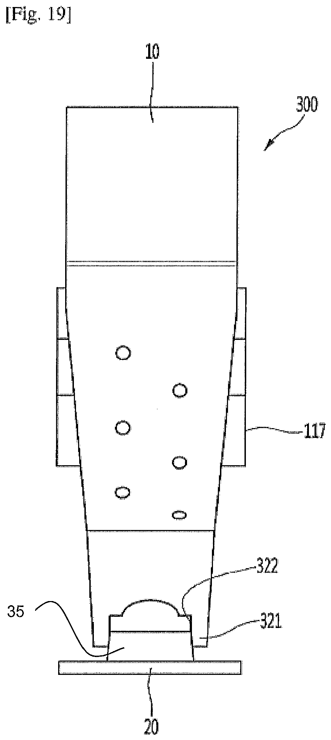

Referring to the side view shown in FIG. 19 in which the spacing member 300 of FIG. 18 is installed, it is seen that the support plate 35 is inserted into the slit 322. Thus, a certain portion of the inner circumference of the slit 322 contacts the side surface of the support plate 35. Thus, no portion of the spacing member 300 contacts a top surface of the support plate 35.

According to the slit 322, even if the lower end of the lower support bending part 321 is flattened, the line contact length between the slit 322 and the support plate 35 only slightly increases, and the limitation of surface contact or the like does not occur. According to this, the increase in thermal conduction may be minimized or substantially eliminated, and the adiabatic loss caused by the spacing member 300 may be reduced as compared to the spacing member 200 of FIG. 15.

The development view according to another embodiment may be similarly applied to the original embodiment and the other embodiments when the slit 322 is not provided.

All the spacing members 100, 200, and 300 disclosed may be fixed by the supporting unit 30 without moving. For example, the bar 31 may be inserted into the insertion hole 131, 231, 331 provided in the spacing member 100, 200, or 300, and the spacing member 100, 200, 300 including the wing 130, 230, 330 in which the insertion hole 131, 231, 331 is defined may be fixed by the supporting unit 30 including the bar 31. Here, the spacing member 100, 200, 300 may slightly move by a gap between the components.

The heat exchange pipeline 117 may be provided within the spacing member 100, 200, 300. The heat exchange pipeline 117 may be provided within the supporting part 110, 210, 310 of the spacing member 100, 200, 300 and thus be fixed in position.

First fixing of the spacing member 100, 200, 300 due to the supporting unit 30 and second fixing of the heat exchange pipeline 117 due to the spacing member 100, 200, 300 may be realized at the same time. According to the first fixing and the second fixing, the heat exchange pipeline 117 may be fixed by the supporting unit 30. In detail, when the heat exchange pipeline 117 is placed in the direction in which the vacuum adiabatic body extends, the vertical and horizontal movement of the heat exchange pipeline 117 may be restricted by the supporting unit 30.

The heat exchange pipeline 117 may be prevented from vertically moving to reduce the adiabatic loss that occurs due to the contact between the heat exchange pipeline 117 and the plate member 10 or 20. The horizontal movement of the heat exchange pipeline 117 may be restricted to prevent the components disposed within the third space such as the support plate 34, the bar 31, and the radiation resistance sheet 32 from colliding with the heat exchange pipeline 117 when an impact is applied to the vacuum adiabatic body, thereby protecting the components within the third space.

The horizontal movement of the heat exchange pipeline 117 may be restricted to prevent the heat exchange pipeline 117 from contacting and approaching the supporting unit 30, i.e., the bar 31, while the vacuum adiabatic body is manufactured. Thus, the inlet pipe 171 and the outlet pipe 172, which constitute the heat exchange pipeline 117, may be promoted in heat transfer therebetween, and the heat transfer between the inlet and outlet pipes 171 and 172 and the supporting unit 30 may be prevented to reduce the adiabatic loss. In addition, an impact applied to the supporting unit 30, i.e., the bar 31 due to the horizontal movement of the heat exchange pipeline 117 may be prevented to improve reliability of the vacuum adiabatic body.

(Industrial Applicability]

The present disclosure may provide a structure that is capable of reliably supporting the heat exchange pipeline as the method for further improving the adiabatic efficiency of the vacuum adiabatic body that is applied to the refrigeration cycle. Therefore, the convenient workability or installation and the reliability of the product may be secured, and the production yield of the product may be improved.

**Claims**

1. A vacuum adiabatic body comprising:

   a first plate (10) configured to define at least a portion of a wall for a first space;
   a second plate (20) configured to define at least a portion of a wall for a second space having a temperature different from that of the first space;
   a sealing part (61) configured to seal the first plate (10) and the second plate (20) so as to provide a third space (50) that has a temperature between a temperature of the first space and a temperature of the second space and is a vacuum space;
   a supporting unit (30) configured to maintain the third space (50), wherein the supporting unit (30) comprises a bar (31) extending in a substantially vertical direction with respect to the plates (10, 20) to support a distance between the first plate (10) and the second plate (20);
   a pipeline (117) placed in the third space (50), wherein the pipeline (117) is a heat exchange pipeline in which two fluids are heat-exchanged with each other;
   wherein the supporting unit (30) is configured to restrict a movement of the pipeline (117) in a horizontal direction with respect to the first and the second plates (10, 20); and
   **characterized in that**:
   a spacing member (100) is provided in the third space (50), wherein the spacing member (100) includes: a supporting part (110, 210, 310) accommodating the heat exchange pipeline (117), and a pair of wings (130, 230, 330) extending in both directions from an upper portion of the supporting part (110) so as to restrict the movement of the heat exchange pipeline (117), and wherein an insertion hole (131) into which the bar (31) is inserted is provided in the wing (130).

2. The vacuum adiabatic body according to claim 1, wherein the spacing member (100, 200, 300) is made of a metal material and interposed between the pipeline (117) and the supporting unit (30).

3. The vacuum adiabatic body according to claim 2, wherein the bar (31, 353, 354) is configured to maintain a gap between the first plate (10) and the second plate (20); and
   the pair of wings are configured to be hung and supported by the bar (31, 353, 354).

4. The vacuum adiabatic body according to claim 3, wherein the supporting unit (30) comprises:

   a first support plate (351) to which a first bar (353) is connected; and
   a second support plate (352) to which a second bar (354) is connected,
   wherein the second bar (354) is configured to be coupled to the first bar (353); and

wherein the insertion hole (131, 231, 331) is supported by a coupling surface between the first bar (353) and the second bar (354).

5. The vacuum adiabatic body according to claim 3, wherein the supporting part (110, 210, 310) surrounds only a portion of the pipeline (117).

6. The vacuum adiabatic body according to claim 1, wherein the pipeline (117) is spaced apart from the first plate (10) and the second plate (20) by a supporting unit (30).

7. The vacuum adiabatic body according to claim 6, wherein a bending part (121) configured to line-contact the supporting unit (30) is disposed at one side of the supporting part (110, 210, 310).

8. The vacuum adiabatic body according to claim 3, wherein a protrusion (111, 211, 311) configured to point-contact the pipeline (117) is disposed on the supporting part (110, 210, 310).

9. The vacuum adiabatic body according to claim 3, wherein a conductive resistance part (320) having a width less than that of the supporting part (110, 210, 310) is disposed below the supporting part (110, 210, 310).

10. The vacuum adiabatic body according to claim 3, wherein a support bending part (221, 240, 321, 340) having an end portion that is rounded is disposed at at least one position below the supporting part (110, 210, 310) and above the wing (130, 230, 330).

11. The vacuum adiabatic body according to claim 10, wherein a slit (322) extending in a longitudinal direction of the support bending part (321) is defined in the support bending part (321).

12. A refrigerator comprising:

a main body (2) configured to provide an internal space in which goods are stored;
a door (3) provided to open and close the main body (2) from an external space;
a compressor (4) configured to compress a refrigerant;
a condenser (5) configured to condense the compressed refrigerant;
an expansion device (6) configured to expand the condensed refrigerant;
an evaporator (7) configured to evaporate the expanded refrigerant to dissipate heat; and
a heat exchange pipeline (117), wherein in the heat exchange pipeline (117) a refrigerant outlet pipe (172) through which a refrigerant is discharged from the evaporator (7) and a refrigerant inlet pipe (171) through which the refrigerant is introduced into the evaporator (7) are heat-exchanged with each other,
wherein the main body (2) comprises a vacuum adiabatic body according to any one of the preceding claims.

**Patentansprüche**

1. Adiabatischer Unterdruckkörper, der Folgendes umfasst:

eine erste Platte (10), die konfiguriert ist, zumindest einen Abschnitt einer Wand für einen ersten Raum zu definieren;
eine zweite Platte (20), die konfiguriert ist, zumindest einen Abschnitt einer Wand für einen zweiten Raum, der eine andere Temperatur als der erste Raum aufweist, zu definieren;
eine Dichtungskomponente (61), die konfiguriert ist, die erste Platte (10) und die zweite Platte (20) abzudichten, um einen dritten Raum (50) bereitzustellen, der eine Temperatur zwischen einer Temperatur des ersten Raums und einer Temperatur des zweiten Raums aufweist und ein Unterdruckraum ist;
eine Trägereinheit (30), die konfiguriert ist, den dritten Raum (50) aufrechtzuerhalten, wobei die Trägereinheit (30) einen Stab (31) umfasst, der sich in einer im Wesentlichen vertikalen Richtung in Bezug auf die Platten (10, 20) erstreckt, um einen Abstand zwischen der ersten Platte (10) und der zweiten Platte (20) beizubehalten; und
eine Rohrleitung (117), die im dritten Raum (50) angeordnet ist, wobei die Rohrleitung (117) eine Wärmeaustausch-Rohrleitung ist, in der ein Wärmeaustausch zwischen zwei Fluiden stattfindet;
wobei die Trägereinheit (30) konfiguriert ist, eine Bewegung der Rohrleitung (117) in einer horizontalen Richtung in Bezug auf die erste und die zweite Platte (10, 20) einzuschränken;
**dadurch gekennzeichnet, dass**

ein Abstandselement (100) im dritten Raum (50) bereitgestellt ist, wobei das Abstandselement (100) Folgendes enthält: eine Trägerkomponente (110, 210, 310), die die Wärmeaustausch-Rohrleitung (117) aufnimmt, und ein Paar Flügel (130, 230, 330), die sich in beiden Richtungen von einem oberen Abschnitt der Trägerkomponente (110) erstrecken, um die Bewegung der Wärmeaustausch-Rohrleitung (117) einzuschränken, wobei im Flügel (130) ein Einsatzloch (131), in das der Stab (31) eingesetzt wird, vorgesehen ist.

2. Adiabatischer Unterdruckkörper nach Anspruch 1, wobei das Abstandselement (100, 200, 300) aus einem Metallmaterial hergestellt ist und zwischen der Rohrleitung (117) und der Trägereinheit (30) eingefügt ist.

3. Adiabatischer Unterdruckkörper nach Anspruch 2, wobei der Stab (31, 353, 354) konfiguriert ist, einen Zwischenraum zwischen der ersten Platte (10) und der zweiten Platte (20) aufrechtzuerhalten; und
das Paar Flügel konfiguriert ist, am Stab (31, 353, 354) aufgehängt zu sein und durch diesen getragen zu werden.

4. Adiabatischer Unterdruckkörper nach Anspruch 3, wobei die Trägereinheit (30) Folgendes umfasst:

eine erste Trägerplatte (351), mit der ein erster Stab (353) verbunden ist; und
eine zweite Trägerplatte (352), mit der ein zweiter Stab (354) verbunden ist,
wobei der zweite Stab (354) konfiguriert ist, mit dem ersten Stab (353) gekoppelt zu sein; und
wobei das Einsatzloch (131, 231, 331) durch eine Kopplungsfläche zwischen dem ersten Stab (353) und dem zweiten Stab (354) getragen wird.

5. Adiabatischer Unterdruckkörper nach Anspruch 3, wobei die Trägerkomponente (110, 210, 310) lediglich einen Abschnitt der Rohrleitung (117) umgibt.

6. Adiabatischer Unterdruckkörper nach Anspruch 1, wobei die Rohrleitung (117) durch eine Trägereinheit (30) von der ersten Platte (10) und der zweiten Platte (20) beabstandet ist.

7. Adiabatischer Unterdruckkörper nach Anspruch 6, wobei an einer Seite der Trägerkomponente (110, 210, 310) eine Biegekomponente (121), die konfiguriert ist, sich mit der Trägereinheit (30) in Linienkontakt zu befinden, angeordnet ist.

8. Adiabatischer Unterdruckkörper nach Anspruch 3, wobei auf der Trägerkomponente (110, 210, 310) ein Vorsprung (111, 211, 311), der konfiguriert ist, sich mit der Rohrleitung (117) in Punktkontakt zu befinden, angeordnet ist.

9. Adiabatischer Unterdruckkörper nach Anspruch 3, wobei unter der Trägerkomponente (110, 210, 310) eine leitfähige Widerstandskomponente (320) mit einer Breite, die kleiner als diejenige der Trägerkomponente (110, 210, 310) ist, angeordnet ist.

10. Adiabatischer Unterdruckkörper nach Anspruch 3, wobei unter der Trägerkomponente (110, 210, 310) und über dem Flügel (130, 230, 330) an mindestens einer Position eine Trägerbiegekomponente (221, 240, 321, 340) mit einem Endabschnitt, der abgerundet ist, angeordnet ist.

11. Adiabatischer Unterdruckkörper nach Anspruch 10, wobei in der Trägerbiegekomponente (321) ein Schlitz (322), der sich in einer Längsrichtung der Trägerbiegekomponente (321) erstreckt, definiert ist.

12. Kühlschrank, der Folgendes umfasst:

einen Hauptkörper (2), der konfiguriert ist, einen Innenraum bereitzustellen, in dem Waren gelagert werden;
eine Tür (3), die vorgesehen ist, um den Hauptkörper (2) in Bezug auf einen Außenraum zu öffnen und zu verschließen;
einen Kompressor (4), der konfiguriert ist, ein Kühlmittel zu komprimieren;
einen Kondensator (5), der konfiguriert ist, das komprimierte Kühlmittel zu kondensieren;
eine Entspannungsvorrichtung (6), die konfiguriert ist, das kondensierte Kühlmittel zu entspannen;
einen Verdampfer (7), der konfiguriert ist, das entspannte Kühlmittel zu verdampfen, um Wärme abzugeben; und
eine Wärmeaustausch-Rohrleitung (117), wobei in der Wärmeaustausch-Rohrleitung (117) ein Wärmeaustausch zwischen einem Kühlmittel-Auslassrohr (172), durch das ein Kühlmittel aus dem Verdampfer (7) ausgelassen wird, und einem Kühlmittel-Einlassrohr (171), durch das das Kühlmittel in den Verdampfer (7) eingeleitet wird, stattfindet,

wobei der Hauptkörper (2) einen adiabatischen Unterdruckkörper nach einem der vorhergehenden Ansprüche umfasst.

**Revendications**

1.  Corps adiabatique sous vide comportant :

    une première plaque (10) configurée pour définir au moins une portion d'une paroi pour un premier espace ;
    une seconde plaque (20) configurée pour définir au moins une portion d'une paroi pour un deuxième espace ayant une température différente de celle du premier espace ;
    une partie d'étanchéité (61) configurée pour étanchéifier la première plaque (10) et la seconde plaque (20) de manière à fournir un troisième espace (50) qui a une température comprise entre la température du premier espace et une température du deuxième espace et est un espace sous vide ;
    une unité de support (30) configurée pour maintenir le troisième espace (50), dans lequel l'unité de support (30) comporte une barre (31) s'étendant dans une direction sensiblement verticale par rapport aux plaques (10, 20) pour supporter une distance entre la première plaque (10) et la seconde plaque (20) ;
    une tuyauterie (117) placée dans le troisième espace (50), dans lequel la tuyauterie (117) est une tuyauterie d'échange de chaleur dans laquelle deux fluides échangent de la chaleur l'un avec l'autre ;
    dans lequel l'unité de support (30) est configurée pour restreindre un mouvement de la tuyauterie (117) dans une direction horizontale par rapport aux première et seconde plaques (10, 20) ; et
    **caractérisé en ce que** :
    un élément d'espacement (100) est agencé dans le troisième espace (50), dans lequel l'élément d'espacement (100) inclut : une partie de support (110, 210, 310) recevant la tuyauterie d'échange de chaleur (117), et une paire d'ailes (130, 230, 330) s'étendant dans les deux directions à partir d'une portion supérieure de la partie de support (110) de manière à restreindre le mouvement de la tuyauterie d'échange de chaleur (117), et dans lequel un trou d'insertion (131) dans lequel la barre (31) est insérée, est ménagé dans l'aile (130).

2.  Corps adiabatique sous vide selon la revendication 1, dans lequel l'élément d'espacement (100, 200, 300) est constitué d'un matériau métallique et intercalé entre la tuyauterie (117) et l'unité de support (30).

3.  Corps adiabatique sous vide selon la revendication 2, dans lequel la barre (31, 353, 354) est configurée pour maintenir un interstice entre la première plaque (10) et la seconde plaque (20) ; et
    les ailes de la paire d'ailes sont configurées pour être accrochées et supportées par la barre (31, 353, 354).

4.  Corps adiabatique sous vide selon la revendication 3, dans lequel l'unité de support (30) comporte :

    une première plaque de support (351) à laquelle une première barre (353) est reliée ; et
    une seconde plaque de support (352) à laquelle une seconde barre (354) est reliée,
    dans lequel la seconde barre (354) est configurée pour être couplée à la première barre (353) ; et
    dans lequel le trou d'insertion (131, 231, 331) est supporté par une surface de couplage entre la première barre (353) et la seconde barre (354).

5.  Corps adiabatique sous vide selon la revendication 3, dans lequel la partie de support (110, 210, 310) entoure seulement une portion de la tuyauterie (117).

6.  Corps adiabatique sous vide selon la revendication 1, dans lequel la tuyauterie (117) est espacée de la première plaque (10) et de la seconde plaque (20) par une unité de support (30).

7.  Corps adiabatique sous vide selon la revendication 6, dans lequel une partie de flexion (121) configurée pour être en contact linéaire avec l'unité de support (30) est disposée sur un côté de la partie de support (110, 210, 310).

8.  Corps adiabatique sous vide selon la revendication 3, dans lequel une saillie (111, 211, 311) configurée pour venir en contact ponctuel avec la tuyauterie (117) est disposée sur la partie de support (110, 210, 310).

9.  Corps adiabatique sous vide selon la revendication 3, dans lequel une partie de résistance conductrice (320) ayant une largeur inférieure à celle de la partie de support (110, 210, 310) est disposée sous la partie de support (110, 210, 310).

**10.** Corps adiabatique sous vide selon la revendication 3, dans lequel une partie de flexion de support (221, 240, 321, 340) ayant une portion d'extrémité qui est arrondie, est disposée à au moins une position au-dessous de la partie de support (110, 210, 310) et au-dessus de l'aile (130, 230, 330).

**11.** Corps adiabatique sous vide selon la revendication 10, dans lequel une fente (322) s'étendant dans une direction longitudinale de la partie de flexion de support (321) est définie dans la partie de flexion de support (321).

**12.** Réfrigérateur comportant :

un corps principal (2) configuré pour fournir un espace interne dans lequel des marchandises sont stockées ;
une porte (3) agencée de manière à ouvrir et fermer le corps principal (2) depuis un espace externe ;
un compresseur (4) configuré pour comprimer un fluide frigorigène ;
un condenseur (5) configuré pour condenser le fluide frigorigène comprimé ;
un dispositif de détente (6) configuré pour détendre le fluide frigorigène condensé ;
un évaporateur (7) configuré pour évaporer le fluide frigorigène détendu afin de dissiper la chaleur ; et
une tuyauterie d'échange de chaleur (117), dans lequel, dans la tuyauterie d'échange de chaleur (117), un tuyau de sortie de fluide frigorigène (172) par lequel un fluide frigorigène est évacué de l'évaporateur (7) et un tuyau d'entrée de fluide frigorigène (171) par lequel le fluide frigorigène est introduit dans l'évaporateur (7), échangent de la chaleur l'un avec l'autre,
dans lequel le corps principal (2) comporte un corps adiabatique sous vide selon l'une quelconque des revendications précédentes.

[Fig. 1]

[Fig. 2]

[Fig. 3]

(a)

(b)

[Fig. 4]

| Group | | General plastic | | | | Engineering plastic | | | |
|---|---|---|---|---|---|---|---|---|---|
| Meaterial | | (HD)PE ※G-Plastic Reference | PC | Glass fiber PC (30% Glass-F) | ※Low outgassing PC | PCTFE | PPS | LCP | PEEK |
| Out-gassing rate | TML(%) | 0.58 | 0.19 | 0.14 | No Data | 0.01 | 0.06 | 0.06 | 0.26 |
| Compressive Strength | MPa | 31.7 | 82.8 | 124.1 | *80.6 | 37.9 | 107.0 | * 151.1 | 137.9 |
| Thermal Conductivity | W/m-k | <0.40 | 0.18 | 0.18 | 0.18 | 0.20 | 0.3 | 0.36 (G/F 50%) | 0.25 |
| Strength /Cond. | MPa-m-k/W | 79 | 460 | 689 | 448 | 189 | 357 | 420 | 552 |
| Heat Deflection Temp at 264 psi | ℃ | 80 | 132 | 146 | 125 | 126 | 121 | 105 ~ 260 | 160 |
| Max Operating Temperature | ℃ | 82 | 121 | 132 | No Data | 132 | 218 | No Data | 249 |
| *Cost(per 1kg) | | Low | $3.1 | $6.2(G/F20%) | $6.7 | High | $30 | $40 | $150 |

23

[Fig. 5]

[Fig. 6]

[Fig. 7]

[Fig. 8]

(a)

(b)

(c)

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100343719
- KR 1020150012712
- NO 1020130049495
- EP 2589905 A2
- KR 20180057596 A
- WO 2018111235 A1
- WO 2018022008 A1
- US 2017176092 A1
- US 2617551 A
- US 2000882 A